# EUROPÄISCHE PATENTSCHRIFT

(11) **EP 0 895 505 B1**
(45) Veröffentlichungstag und Bekanntmachung des Hinweises auf die Patenterteilung: **10.07.2002**
(21) Anmeldenummer: 98912363.3
(22) Anmeldetag: 21.02.1998
(51) Int. Cl.: B65H 75/34, H02G 11/02

(54) **AUFWICKELEINRICHTUNG**
WINDING DEVICE
DISPOSITIF D'ENROULEMENT

(30) Priorität: 24.02.1997 DE 19707205
(43) Veröffentlichungstag der Anmeldung: 10.02.1999
(73) Patentinhaber: RWE Piller Gmbh, 37520 Osterode am Harz (DE)
(72) Erfinder: UEFFING, Norbert, D-37520 Osterode (DE); HUNTGEBURTH, Joachim, D-37115 Duderstadt (DE); VON SOTHEN, Heinrich, D-37115 Duderstadt (DE)
(74) Vertreter: Beck, Jürgen, Dr. Dipl.-Phys.
(86) Internationale Anmeldenummer: EP9801006
(87) Internationale Veröffentlichungsnummer: WO9837006

(56) Entgegenhaltungen:
- DE-A- 3 008 544
- DE-A- 3 517 838
- FR-A- 2 146 118
- FR-A- 2 491 043
- GB-A- 2 057 707
- US-A- 4 661 660
- PATENT ABSTRACTS OF JAPAN vol. 009, no. 279 (M-427), 7.November 1985 -& JP 60 122671 A (HIROSHI MORI), 1.Juli 1985,
- PATENT ABSTRACTS OF JAPAN vol. 008, no. 146 (M-307), 7.Juli 1984 -& JP 59 043776 A (MITSUBISHI JUKOGYO KK;OTHERS: 01), 10.März 1984,
- PATENT ABSTRACTS OF JAPAN vol. 018, no. 687 (E-1651), 26.Dezember 1994 -& JP 06 276655 A (KUBOTA CORP), 30.September 1994,

## Beschreibung

Die Erfindung betrifft eine Aufwickeleinrichtung für eine Leitung, insbesondere für ein elektrisches Kabel, umfassend ein Gestell, an welchem eine Aufwickeltrommel für die Leitung um eine Drehachse drehbar gelagert ist, und eine Drehverbindung zwischen einem gestellfesten und einem aufwickeltrommelfesten Leitungsanschluß.

Derartige Aufwickeleinrichtungen sind aus dem Stand der Technik bekannt (GB-A-2 057 707). Bei diesen Aufwickeleinrichtungen wird die Drehverbindung so gestaltet, daß ein Leitungsstück eine mehr oder weniger große Verdrillung erfährt.

Diese Lösungen haben den Nachteil, daß das nach der Verdrillung unterworfene Leitungsstück starken mechanischen Beanspruchungen unterworfen ist und somit eine lediglich begrenzte Standzeit der Drehverbindung zuläßt.

Andere, nur für elektrische Kabel geeignete Lösungen sehen beispielsweise Schleifringkontakte vor, die jedoch ebenfalls verschleißbehaftet und störungsanfällig sind.

Der Erfindung liegt daher die Aufgabe zugrunde, eine Aufwickelvorrichtung der gattungsgemäßen Art derart zu verbessern, daß eine möglichst zuverlässige Drehverbindung vorliegt.

Diese Aufgabe wird bei einer Aufwickeleinrichtung der eingangs beschriebenen Art erfindungsgemäß durch die Merkmale der Anspruchs 1 gelöst.

Der Vorteil der erfindungsgemäßen Lösung ist darin zu sehen, daß mit dieser eine Beanspruchung der Verbindungsleitung hinsichtlich einer Verdrillung unterbleiben kann und somit lediglich ein Umwickeln von der einen auf die andere Hilfstrommel erfolgt, so daß die einzige Beanspruchung, der die Verbindungsleitung unterworfen ist, die Wickelbeanspruchung ist.

Prinzipiell wäre es denkbar, den Tänzer so auszubilden, daß er ebenfalls noch eine Wickeltrommel aufweist und somit zwischen dem Tänzer und der jeweiligen Hilfstrommel ein aufoder abwickeln der Verbindungsleitung erfolgt.

Besonders günstig ist es jedoch, wenn die Verbindungsleitung zwischen dem ersten und dem zweiten Strang wicklungsfrei über den Tänzer, insbesondere über eine Führung des Tänzers geführt ist, so daß die Verbindungsleitung stets um die Leitungslänge über die Führung des Tänzers gezogen wird, die beim Abwickeln von der einen Hilfstrommel entsteht und beim Aufwickeln auf der anderen Hilfstrommel benötigt wird.

Besonders einfach läßt sich dies dann realisieren, wenn die Verbindungsleitung in Form einer Umbiegung über die Führung des Tänzers geführt ist.

Die Führung des Tänzers könnte beispielsweise als Gleitführung für die Verbindungsleitung ausgebildet sein. Besonders günstig ist jedoch eine Lösung, bei welcher der Tänzer eine die Verbindungsleitung mittels Rollen führende Durchlaufführung aufweist, da in diesem Fall diese Durchlaufführung der durch den Tänzer gezogenen Verbindungsleitung einen sehr geringen Reibungswiderstand entgegensetzt und somit ebenfalls die Beanspruchung der Verbindungsleitung reduziert.

Im Zusammenhang mit der bisherigen Beschreibung der einzelnen erfindungsgemäßen Lösungen wird lediglich davon ausgegangen, daß die Verbindungsleitung von der einen Hilfstrommel über den Tänzer zur anderen Hilfstrommel verläuft.

Beispielsweise könnte dabei der Tänzer in axialer Richtung der Hilfstrommeln fixiert angeordnet sein und lediglich in der Bereits beschriebenen Weise um die Drehachse umlaufen.

Eine besonders günstige Lösung sieht jedoch vor, daß die Führung für die Verbindungsleitung an einer parallel zur Drehachse verlaufenden Linearführung geführt ist und somit die Möglichkeit hat, sich in Richtung parallel zur Drehachse so zu bewegen, daß der Tänzer stets ein möglichst schonendes Aufwickeln der Verbindungsleitung auf die eine Hilfstrommel und Abwickeln der Verbindungsleitung von der anderen Hilfstrommel gewährleistet.

Besonders günstig ist es dabei, wenn die für die Verbindungsleitung vorgesehene Führung des Tänzers so ausgebildet ist, daß der erste und der zweite Strang im wesentlichen parallel zueinander und damit insbesondere in einer zur Drehachse im wesentlichen senkrechten Richtung verlaufen und somit eine eindeutige Führung des Verbindungskabels auf der jeweiligen Hilfstrommel realisierbar ist, ohne daß eine unnötige Reibung der Verbindungsleitung an der Hilfstrommel, insbesondere mit einer die Verbindungsleitung auf der jeweiligen Hilfstrommel führenden Wendel, auftritt.

Hinsichtlich der Umlaufbewegung für den Tänzer wurden bislang keine näheren Angaben gemacht. So wäre es beispielsweise insbesondere bei einer Lösung denkbar, bei der der Tänzer wenige Umlaufbewegungen durchführen muß, den Tänzer in einer die Stränge spannenden Richtung mit einer Federkraft zu beaufschlagen, die gleichzeitig auch für die Umlaufbewegung des Tänzers verantwortlich ist.

Besonders günstig für die Verbindungsleitung und besonders schonend für diese ist es jedoch, wenn der Tänzer in einem festgelegten Verhältnis zur Drehung der ersten Hilfstrommel angetrieben ist. In diesem Fall läßt sich aufgrund des festgelegten Verhältnisses der Drehzahlen auch eine möglicherweise in der Verbindungsleitung auftretende Zugspannung weitgehend ausschalten.

Dabei ist es besonders günstig, wenn die Drehung der ersten Hilfstrommel und die Umlaufbewegung des Tänzers miteinander synchronisiert sind.

Dies wäre beispielsweise realisierbar durch zwei Antriebe, die elektronisch miteinander synchronisiert sind.

Besonders einfach läßt sich jedoch eine Synchronisierung der Umlaufbewegung des Tänzers mit der der ersten Hilfstrommel dann erreichen, wenn die Drehung der ersten Hilfstrommel und die Umlaufbewegung des Tänzers über ein Getriebe gekoppelt sind.

Das Getriebe könnte in unterschiedlichster Art und Weise an der erfindungsgemäßen Aufwickeleinrichtung angeordnet sein. So wäre es beispielsweise denkbar, das Getriebe an der sich drehenden Aufwickeltrommel zu halten. Eine besonders günstige Lösung sieht jedoch vor, daß das Getriebe gestellfest angeordnet ist und sich somit mit der Aufwickeltrommel nicht mitdreht.

Eine besonders günstige und auch wartungsfreundliche Anordnung des Getriebes sieht vor, daß dieses außerhalb der Aufwickeltrommel angeordnet ist.

Hinsichtlich der Lagerung des Tänzers wurden im Zusammenhang mit der bisherigen Erläuterung der einzelnen Ausführungsbeispiele keine näheren Angaben gemacht. So wäre es beispielsweise denkbar, den Tänzer an einem um die Hilfstrommel umlaufenden Ring, beispielsweise mit einer ringförmigen Gleitbahn, zu lagern.

Eine besonders einfache und günstige Lösung sieht vor, daß der Tänzer auf einer Antriebswelle für die erste Hilfstrommel drehbar gelagert ist. In diesem Fall läßt sich die Lagerung des Tänzers in einfacher Art und Weise auch mit der Lagerung der Antriebswelle für die erste Hilfstrommel kombinieren.

Um eine möglichst kompakte Aufwickeleinrichtung zur Verfügung zu stellen, ist es besonders vorteilhaft, wenn die Drehverbindung im wesentlichen in einem Innenraum der Aufwickeltrommel angeordnet ist. Diese Lösung bietet einerseits die Möglichkeit, eine relativ große Aufwickeltrommel vorzusehen, auf der große Längen für die aufzuwickelnde Leitung aufwickelbar sind. Ferner ermöglicht die Lösung eine Optimierung hinsichtlich der Kompaktheit dahingehend, daß die Drehverbindung nicht mehr den für die Aufwickeltrommel erforderlichen Bauraum vergrößert, sondern in einem Innenraum der Aufwickeltrommel angeordnet ist.

Ferner wird die erfindungsgemäße Lösung, die auch einen Antrieb für die Aufwickeltrommel benötigt, insbesondere dann kompakt, wenn die Aufwickeltrommel durch einen in einem Innenraum derselben angeordneten Drehantrieb angetrieben ist, so daß auch für den Drehantrieb für die Aufwickeltrommel kein zusätzlicher Bauraum benötigt wird.

Um den Hilfstrommeln einen möglichst kleinen Durchmesser geben zu können, ohne die einzelnen von der Verbindungsleitung umfaßten Leitungen zu sehr mechanisch zu beanspruchen, sieht vor, daß die Verbindungsleitung mehrere getrennte Einzelleitungen aufweist, die von dem Tänzer gemeinsam von einer Hilfstrommel auf die andere Hilfstrommel umwickelbar sind.

Die Einzelleitungen könnten prinzipiell parallel nebeneinander liegend auf den Hilfstrommel angeordnet werden. Eine besonders kompakte Anordnung der Einzelleitungen läßt sich jedoch dann erreichen, wenn die Einzelleitungen auf den Hilfstrommeln in radialer Richtung aufeinander liegend angeordnet sind, so daß der axiale Bauraum der Hilfstrommeln möglichst gering gehalten werden kann.

Um die Einzelleitungen radial aufeinander liegend auf den Hilfstrommeln in dieser Stellung stabilisieren zu können, ist vorzugsweise vorgesehen, daß die Hilfstrommeln in Form einer Wendel verlaufende Führungsstege aufweisen, zwischen denen die Einzelleitungen liegen.

Um jedoch die Einzelleitungen, die radial aufeinander liegend von den Hilfstrommeln ab- und auf diese aufgewickelt werden, im Tänzer möglichst günstig zu führen, ist vorgesehen, daß die Einzelleitungen nebeneinander liegend über den Tänzer verlaufen, das heißt, daß die Einzelleitungen in nebeneinander liegenden U- oder V-förmigen Bögen über den Tänzer verlaufen, wobei die U- oder V-förmigen Bögen der einzelnen Einzelleitungen ungefähr die gleiche Form aufweisen und nebeneinander liegen.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine teilweise aufgebrochene Frontansicht einer erfindungsgemäßen Aufwickeleinrichtung;
- Fig. 2: eine vergrößerte ausschnittsweise Darstellung eines halbseitigen Innenraums einer Aufwickeltrommel mit Dreheinrichtung;
- Fig. 3: eine Seitenansicht in Richtung des Pfeils A in Fig. 1;
- Fig. 4: eine vergrößerte Darstellung eines erfindungsgemäßen Tänzers mit derselben Blickrichtung wie Fig. 3 und
- Fig. 5: eine vergrößerte, teilweise geschnittene Darstellung des erfindungsgemäßen Tänzers in einer Ansicht in Richtung des Pfeils B in Fig. 4.

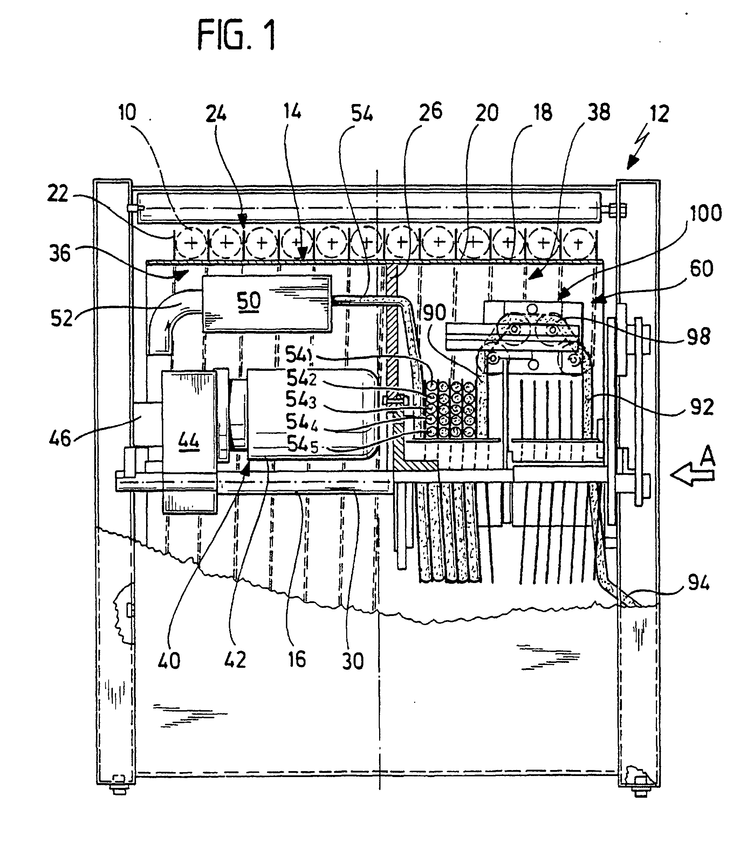

Ein in Fig. 1 dargestelltes erstes Ausführungsbeispiel einer erfindungsgemäßen Aufwickelvorrichtung für eine Leitung, in diesem Fall ein elektrisches Kabel 10, welches als flexibles ein- oder mehradriges Stromversorgungskabel insbesondere im Bereich der Flughafenbodenstromversorgung dient, umfaßt ein als Ganzes mit 12 bezeichnetes Gestell, in welchem eine Aufwickeltrommel 14 um eine Drehachse 16 drehbar gelagert ist.

Die Aufwickeltrommel 14 umfaßt einen zylindrischen Trommelkörper 18, auf dessen Außenseite 20 ein Steg 22 bezüglich der Drehachse 16 schraubenförmig umlaufend angeordnet ist und somit eine auf der Außenseite 20 angeordnete Wendel 24 bildet, wobei der Steg 22 senkrecht zur zylindrisch geformten Außenseite 20 angeordnet ist.

Die Steigung der Wendel 24 ist dabei so gewählt, daß das Kabel 10 mit der Zahl der Wendel 24 entsprechenden Windungen in die Wendel 24 einlegbar ist, so daß zwischen unmittelbar aufeinanderfolgenden Windungen der Wendel jeweils eine Windung des Kabels 10 aufwickelbar ist.

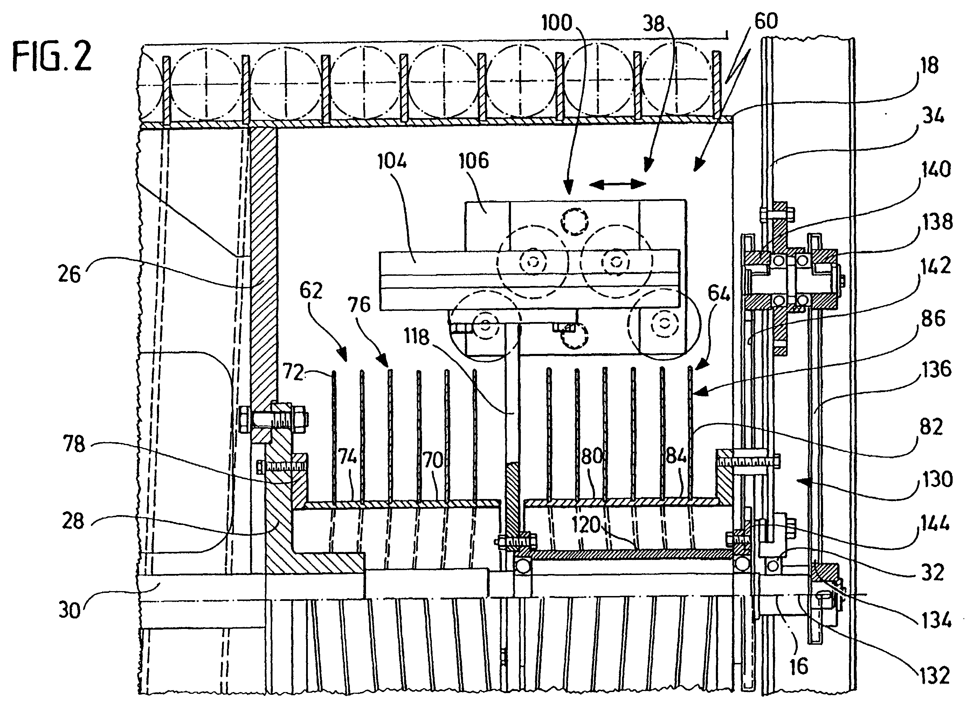

Der Trommelkörper 18 wird dadurch zylindrisch zu der Achse 16 geführt, daß dieser auf einer in Richtung einer axialen Erstreckung des Trommelkörpers 18 parallel zur Drehachse 16 mittig angeordneten Tragwand 26 sitzt, welche, wie in Fig. 2 dargestellt, mit einem Flansch 28 verbunden ist, der drehfest auf einer als Ganzes mit 30 bezeichneten und zur Drehachse 16 koaxialen Welle sitzt.

Die Welle 30 ist dabei jeweils endseitig über Radiallager 32 an einem Lagerträger 34 des Gestells 12 um die Drehachse 16 drehbar gelagert.

Durch die Tragwand 26 werden innerhalb des Trommelkörpers 18 ein erster Innenraum 36 und ein zweiter Innenraum 38 gebildet, die beide durch die Tragwand 26 voneinander getrennt sind.

In dem ersten Innenraum 26 ist ein als Ganzes mit 40 bezeichneter Antrieb für die Aufwickeltrommel 14 vorgesehen, welcher beispielsweise als Elektromotor 42 mit einem Getriebe 44 ausgebildet ist, wobei das Getriebe 44 unmittelbar auf die Welle 30 wirkt, um diese zu drehen. Zusätzlich ist eine Drehmomentabstützung 46 zwischen dem Antrieb 40 und dem Gestell 12 vorgesehen, welche den Antrieb 40 drehfest relativ zum Gestell 12 positioniert.

In dem ersten Innenraum 36 ist ferner ein als Ganzes mit 50 bezeichneter Klemmenkasten fest mit der Aufwickeltrommel 14, vorzugsweise den Trommelkörper 18, verbunden angeordnet, in welchem ein aufwickeltrommelfestes Ende 52 des Kabels 10 angeschlossen ist und zwar an eine als Ganzes mit 54 bezeichnete Verbindungsleitung.

Die Verbindungsleitung 54 umfaßt dabei beispielsweise insgesamt fünf gleich dicke hochflexible Einzelleitungen 54₁ bis 54₅, die alle aus dem Klemmenkasten 50 herausgeführt sind.

Die Verbindungsleitung 54 ist Teil einer als Ganzes mit 60 bezeichneten Drehverbindung, welche im wesentlichen in dem zweiten Innenraum 38 des Trommelkörpers 18 angeordnet ist.

Diese Drehverbindung umfaßt, wie insbesondere vergrößert in Fig. 2 im einzelnen dargestellt, eine erste auf der Welle 30 sitzende und drehfest mit dieser verbundene Hilfstrommel 62 sowie eine zweite fest mit dem Gestell verbundene Hilfstrommel 64 die koaxial zueinander und vorzugsweise koaxial zur Drehachse 16 in dem zweiten Innenraum 38 angeordnet sind.

Die erste Hilfstrommel 62 umfaßt dabei ihrerseits einen koaxial zur Drehachse 16 angeordneten zylindrischen Hilfstrommelkörper 70, auf welchem ein Führungssteg 72 so angeordnet ist, daß dieser Führungssteg senkrecht auf einer zylindrischen Außenfläche 74 des Hilfstrommelkörpers 70 steht.

Der Führungssteg 72 verläuft ebenfalls in Form einer Wendel 76 zur Drehachse 16, wobei die Zahl der Windungen der Wendel 76 der Hälfte der Zahl der Windungen der auf dem Trommelkörper 18 angeordneten Wendel 24 für das Kabel 10 beträgt.

Die Führungsstege 72 weisen dabei in radialer Richtung zur Drehachse 16 eine derartige Erstreckung über die zylindrische Außenfläche 74 hinaus auf, die so bemessen ist, daß zwischen zwei aufeinanderfolgenden Windungen der Wendel 76 die Einzelleitungen 54₁ bis 54₅ der Verbindungsleitung 54 in radialer Richtung aufeinanderliegend angeordnet werden können, so daß jede einzelne Windung der Wendel 76 die in radialer Richtung aufeinanderliegenden Einzelleitungen 51₁ bis 54₅ der Verbindungsleitung 54 aufnimmt.

Vorzugsweise erstreckt sich der Hilfstrommelkörper 70 der ersten Hilfstrommel 62 ausgehend von einem Montageflansch 78, welcher an dem drehfest auf der Welle 30 sitzenden und die Tragwand 26 tragenden Flansch 28 aufliegt und mit diesem verbunden ist, wobei der Hilfstrommelkörper 70 rohrförmig die einen sich an den Flansch 28 anschließenden und den zweiten Innenraum 38 durchsetzenden Abschnitt der Welle 30 teilweise rohrförmig umschließt.

Ferner liegt zwischen dem drehfest mit der Welle 30 verbundenen ersten Hilfstrommelkörper 62 und der dem zweiten Innenraum 38 zugewandten Seite des Gestells 12, vorzugsweise dem Lagerträger 34, der zweite Hilfstrommelkörper 64, welcher unverdrehbar an dem Gestell 12, vorzugsweise am Lagerträger 34, gehalten ist.

Auch die zweite Hilfstrommel 64 weist einen Hilfstrommelkörper 80 auf, welcher vorzugsweise denselben Durchmesser aufweist wie der Hilfstrommelkörper 70 und einen Führungssteg 82, welcher in gleicher Weise wie der Führungssteg 72 wendelförmig, allerdings mit umgekehrter Wicklungsrichtung verläuft und ebenfalls senkrecht zu einer zylindrischen Außenfläche 84 des Hilfstrommelkörpers 80 steht und sich über diese in radialer Richtung ebenfalls so weit hinauserstreckt, daß die sich bildende Wendel 86 mit jeder Windung in der Lage ist, die fünf Einzelleitungen 54₁ bis 54₅ in radialer Richtung aufeinanderliegend aufzunehmen.

Die Zahl der Windungen der Wendel 86 entspricht der Zahl der Windungen der Wendel 76 und somit der Hälfte der Zahl der Windungen der Wendel 24.

Die Verbindungsleitung 54 weist nun eine derartige Länge auf, daß, wie in Fig. 1 dargestellt, bei voll in die Wendel 76 eingewickelter Verbindungsleitung die Verbindungsleitung im wesentlichen vollständig von der Wendel 86 abgewickelt ist und umgekehrt.

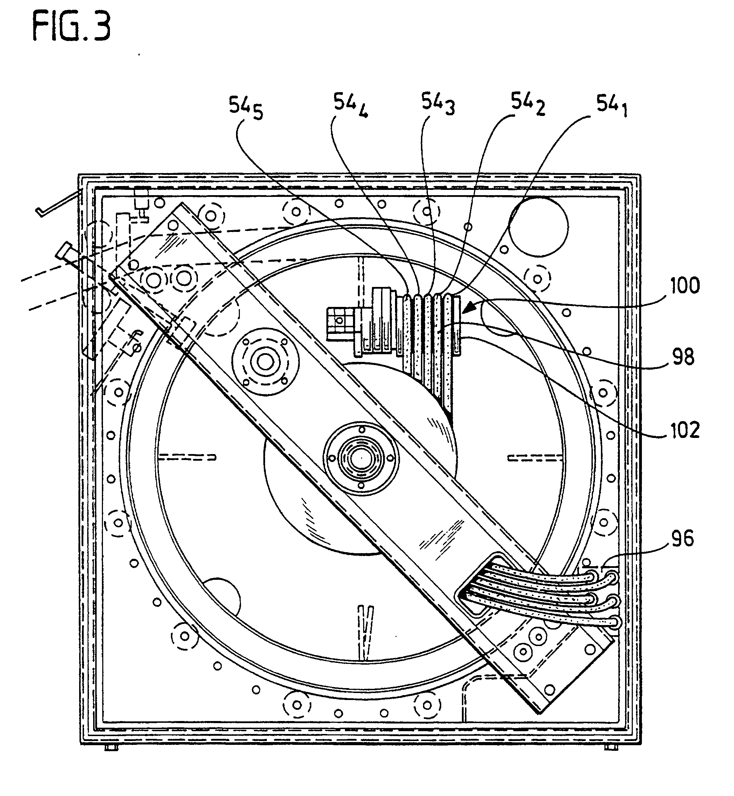

Die Verbindungsleitung 54 ist dabei, wie in Fig. 1 dargestellt, ausgehend von dem Klemmenkasten 50 zunächst in einen der Tragwand 26 zugewandten Anfang der Wendel 76 eingelegt und in diese soweit eingewickelt, bis ein erster Strang 90 der Verbindungsleitung 54 von der ersten Hilfstrommel 62 weg zu einem als Ganzes mit 100 bezeichneten Tänzer verläuft, über den Tänzer 100 in später noch näher beschriebener Weise gezogen ist und dann mit einem zweiten Strang 92 zur zweiten Hilfstrommel 64 verläuft und auf diese so aufgewickelt ist, daß ausgehend von einer dem Gestell 12 zugewandten letzten Windung der Wendel 86 der Leitung 54 ein Endstück 94 entlang des Lagerträgers 34, wie in Fig. 3 dargestellt, zu einem gestellseitigen Klemmenkasten 96 geführt ist.

Über den Tänzer 100 verläuft die Verbindungsleitung 54 mit einem zwischen dem ersten Strang 90 und dem zweiten Strang 92 liegenden U- oder V-förmigen Bogen 98, wobei in diesem Bogen 98, wie in Fig. 3 dargestellt, sämtliche Einzelleitungen 54₁ bis 54₅ nebeneinanderliegend über einen Führungsrollensatz 102 laufen und zwar so, daß sowohl der erste Strang 90 als auch der zweite Strang 92 auf derselben Seite der Drehachse 16 liegend zu den Hilfstrommeln 62 und 64 verlaufen.

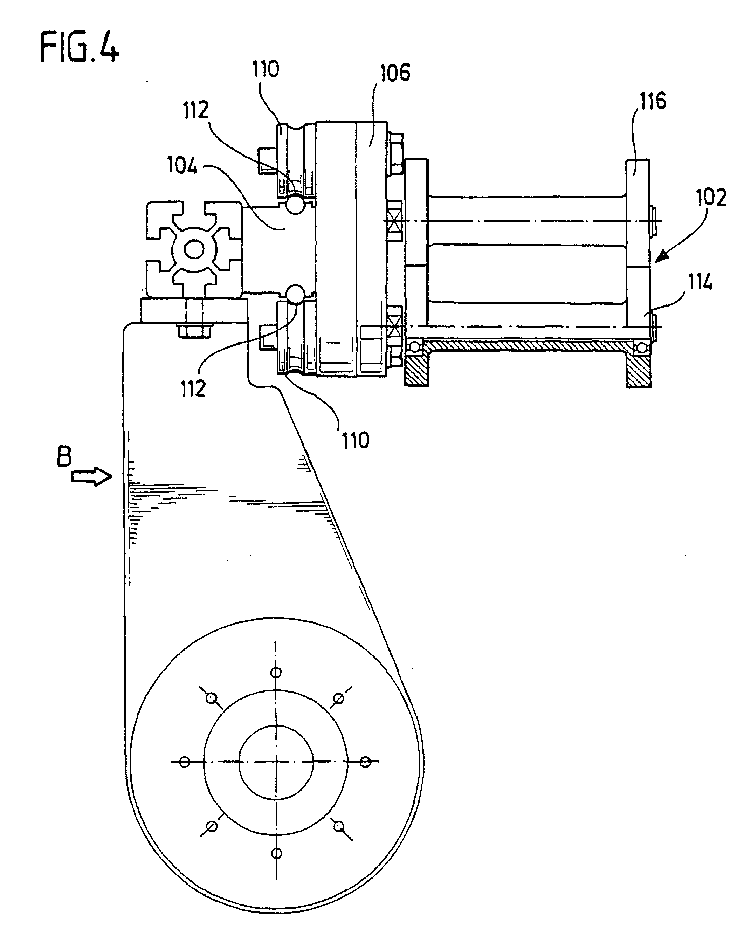

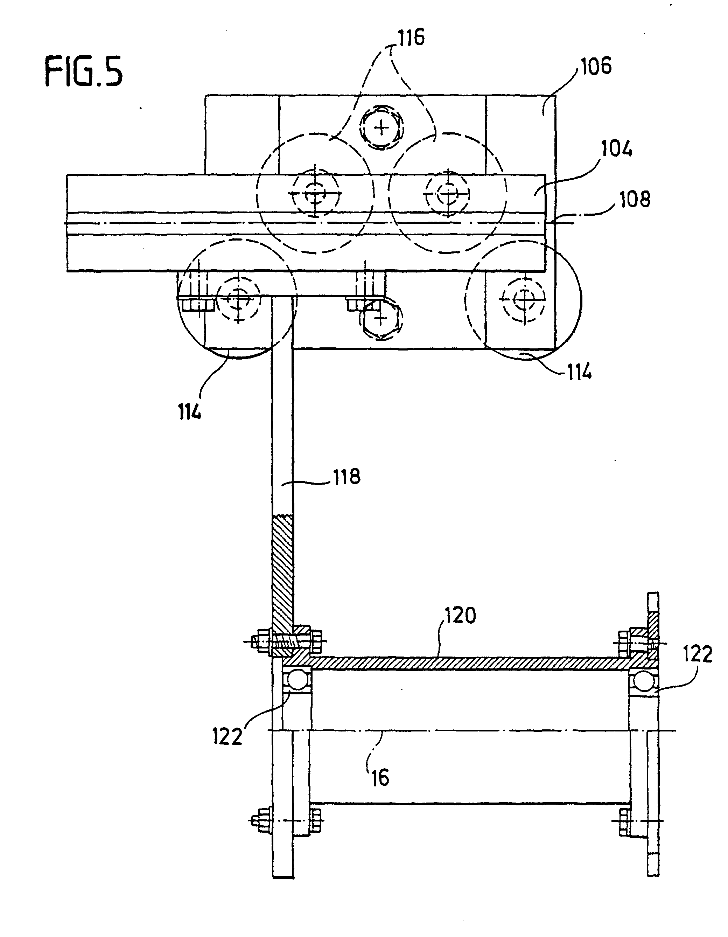

Der Tänzer 100 umfaßt, wie in Fig. 4 und 5 verdeutlicht, eine sich parallel zur Drehachse 16 erstreckende Linearführung 104, an welcher ein als Ganzes mit 106 bezeichneter Führungswagen in Richtung der Drehachse 16, und zwar in einer zu dieser parallelen Führungsrichtung 108, verschiebbar ist.

Der Führungswagen 106 gleitet dabei beispielsweise mit einem Rollensatz 110 auf beiderseits der Linearführung 104 liegenden Führungsflächen 112.

Der Führungswagen 106 ist erfindungsgemäß längs der Linearführung 104 frei bewegbar.

Der Führungswagen 106 trägt seinerseits den Führungsrollensatz 102, welcher vorzugsweise zwei untere Führungsrollen 114 und zwei obere Führungsrollen 116 aufweist, die parallel zueinander angeordnet sind, wobei die unteren Führungsrollen 114 vorzugsweise einen Abstand voneinander aufweisen, der so gewählt ist, daß die zu den unteren Führungsrollen 114 verlaufenden Stränge 90 und 92 jeweils im wesentlichen parallel zueinander verlaufen und insbesondere auch parallel zu den Führungsstegen 72 und 82. Dagegen sind die oberen Führungsrollen 116, welche auf einer den Hilfstrommeln 62 und 64 abgewandten Seite der unteren Führungsrollen liegen, in geringerem Abstand voneinander und zwischen den unteren Führungsrollen 114 liegend angeordnet, so daß die Verbindungsleitung 54 in dem bereits beschriebene U-förmigen oder V-förmigen Bogen ausgehend von den unteren Führungsrollen 114 über die oberen Führungsrollen 116 verläuft.

Sämtliche Führungsrollen 114 und 116 des Führungsrollensatzes 102 sind frei drehbar am Führungswagen 106 gelagert.

Die Linearführung 104 ist ihrerseits an einem Tragarm 118 gehalten, der von einer Hohlwelle 120 sich in radialer Richtung erstreckt, wobei die Hohlwelle 120 die Welle 32 umschließend angeordnet und mittels Drehlagern 122 drehbar relativ zur Welle 30 gelagert ist.

Damit besteht die Möglichkeit, daß sich die Hohlwelle 120 mit anderer Drehzahl dreht als die Welle 30.

Die Hohlwelle 120 liegt dabei, wie insbesondere in Fig. 2 dargestellt, innerhalb des Hilfstrommelkörpers 80 der zweiten Hilfstrommel 64, wird von der Hilfstrommel 64 umschlossen und erstreckt sich im wesentlichen über deren gesamte axiale Länge in Richtung der Drehachse, wobei der Tragarm 118 zwischen der ersten Hilfstrommel 62 und der zweiten Hilfstrommel 64 sich in radialer Richtung der Drehachse 16 bis zur Längsführung 104 erstreckt und die Längsführung 104 derart radial außerhalb der Hilfstrommeln 62 und 64 anordnet, daß sich der Führungswagen 106 radial außenliegend bezüglich der Hilfstrommeln 62 und 64 frei bewegen kann, um das von der einen Hilfstrommel kommende Kabel zur anderen hin umzulenken.

Die um die Drehachse 16 umlaufende Bewegung des Tänzers 100 wird dadurch bewirkt, daß die Hohlwelle 120 mittels eines Getriebes 130 antreibbar ist, welches ein erstes drehfest auf der Welle 30, vorzugsweise an einem über den Trommelkörper 18 und durch den Lagerträger 34 hindurchtretenden Ende 132 der Welle 30, sitzendes Kettenrad 134 umfaßt, von welchem ausgehend eine Antriebskette 136 ein zweites Kettenrad 138 treibt, das seinerseits an dem Lagerträger 34 drehbar gelagert ist.

Dieses zweite Kettenrad treibt ein drittes Kettenrad 140, welches auf einer dem Trommelkörper 18 zugewandten Seite des Lagerträgers 34 sitzt und seinerseits eine zweite Kette 142 antreibt, über welche ein Kettenrad 144 antreibbar ist, das drehfest mit der Hohlwelle 120 des Tänzers 100 verbunden ist.

Das Getriebe 130 ist dabei so ausgelegt, daß sich die Hohlwelle 120 mit der halben Drehzahl der Welle 30 dreht.

Damit läuft auch der Tänzer 100 mit der halben Drehzahl um, mit welcher sich die Welle 30 dreht und mit welcher sich somit auch die erste Hilfstrommel 62 dreht, während die zweite Hilfstrommel 64 aufgrund ihrer festen Verbindung mit dem Gestell 12 stets stehen bleibt.

Dies führt dazu, daß bei einem Drehen der ersten Hilfstrommel 62 der sich mit der halben Drehzahl drehende Tänzer 100 beispielsweise eine definierte Länge des Verbindungskabels 54 von der ersten Hilfstrommel 62 abwickelt.

Da sich jedoch der Tänzer 100 mit der gleichen Relativgeschwindigkeit, mit welcher er sich langsamer als die erste Hilfstrommel 62 bewegt, um das Verbindungskabel 54 abzuwickeln, relativ zur zweiten Hilfstrommel 64 schneller dreht, um auf dieser wieder das Verbindungskabel 54 aufzuwickeln, ist bei gleichem Durchmesser der Hilfstrommelkörper 70 und 80 die vom Tänzer 100 jeweils abgewickelte Länge des Verbindungskabels 54 gleich der auf die zweite Hilfstrommel 64 aufgewickelten Länge, sofern sich der Tänzer 100 - wie bereits beschrieben - mit der halben Drehzahl der ersten Hilfstrommel 62 dreht.

Damit wird stets von der ersten Hilfstrommel 62 die gleiche Länge des Verbindungskabels 54 abgewickelt, wie auf der zweiten Hilfstrommel 64 aufgewickelt wird und umgekehrt, so daß das Verbindungskabel 54 eine Verbindung zwischen dem gestellfesten Klemmenkasten 96 und dem mit der Aufwickeltrommel 14 mitdrehende Klemmenkasten 50 herstellt, ohne daß dabei eine Verdrillung des Verbindungskabels 54 in irgendeinem Abschnitt erfolgt. Es wird lediglich das Verbindungskabel 54 zwischen der ersten Hilfstrommel 62 und der zweiten Hilfstrommel 64 hin- und hergewickelt.

Darüber hinaus ist aufgrund der Tatsache, daß die relative Drehzahl zwischen dem Tänzer 100 und der ersten Hilfstrommel 62 der halben Drehzahl der ersten Hilfstrommel 62 relativ zum Gestell 12 und somit auch der Aufwickeltrommel 14 zum Gestell 12 entspricht, die Zahl der Windungen der Wendel 76 halb so groß, wie die Zahl der Windungen der Wendel 24, so daß in der Drehverbindung 60 nur eine Zahl von Windungen des Verbindungskabels 54 von einer Hilfstrommel auf die andere Hilfstrommel umgewickelt werden muß, welche der Hälfte der Zahl der Windungen des Kabels 10 entspricht, die von der Aufwickeltrommel 14 abgewickelt oder auf diese aufgewickelt werden.

Somit wird das einerseits aufwickeltrommelfest und andererseits gestellfest verbundene Verbindungskabel 54 aufgrund des lediglich erforderlichen Umwickelns von einer Hilfstrommel auf die andere dem geringstmöglichen Verschleiß unterworfen, insbesondere keiner verschleißträchtigen Verdrillung, so daß ein lange störungsfreier Betrieb der erfindungsgemäßen Drehverbindung 60 gewährleistet ist.

## Patentansprüche

1. Aufwickeleinrichtung für eine Leitung, umfassend ein Gestell, an welchem eine Aufwickeltrommel für die Leitung um eine Achse drehbar gelagert ist,
und eine Drehverbindung zwischen einem gestellfesten und einem aufwickeltrommelfesten Leitungsanschluß, welche eine sich mit der Aufwickeltrommel (14) mitdrehende erste Hilfstrommel (62) und eine gestellfeste zweite Hilfstrommel (64) aufweist, die koaxial zu einer Drehachse (16) angeordnet sind, welche einen Tänzer (100) aufweist, der um die Drehachse (16) mit einer geringeren Geschwindigkeit als die erste Hilfstrommel (62) drehbar ist, und welche eine einerseits auf wickeltrommel fest und andererseits gestellfest verbundene und verdrillungsfrei verlaufende Verbindungsleitung (54) aufweist, die auf die erste Hilfstrommel (62) auf- oder von dieser abwickelbar ist, von der ersten Hilfstrommel (62) mit einem ersten Strang (90) zum Tänzer (100) und vom Tänzer (100) mit einem zweiten Strang (92) zur zweiten Hilfstrommel (64) verläuft und von dieser ab- oder aufwickelbar ist, wobei der Tänzer (100) den ersten Strang (90) und den zweiten Strang (92) im wesentlichen durchhängungsfrei verlaufend hält und der Tänzer (100) bei seiner Umlaufbewegung die von der einen Hilfstrommel (62, 64) abgewickelte Leitungslänge aufnimmt und die auf die andere Hilfstrommel (64, 62) aufgewickelte Leitungslänge abgibt, **dadurch gekennzeichnet, daß** die Verbindungsleitung (54) mehrere Einzelleitungen (54₁ bis 54₅) aufweist, die von dem Tänzer (100) gemeinsam von einer Hilfstrommel (62,64) auf die andere Hilfstrommel (64,62) umwickelbar sind.

2. Aufwickeleinrichtung nach Anspruch 1, **dadurch gekennzeichnet, daß** die Einzelleitungen (54₁ bis 54₅) auf den Hilfstrommeln (62,64) in radialer Richtung aufeinander liegend angeordnet sind.

3. Aufwickeleinrichtung nach Anspruch 2, **dadurch gekennzeichnet, daß** die Hilfstrommeln (62,64) in Form einer Wendel (76,86) verlaufende Führungsstege (72,82) aufweisen, zwischen denen die Einzelleitungen (54₁ bis 54₅) liegen.

4. Aufwickeleinrichtung nach einem der Ansprüche 2 oder 3, **dadurch gekennzeichnet, daß** die Einzelleitungen (54₁ bis 54₅) nebeneinander liegend über den Tänzer (100) laufen.

5. Aufwickeleinrichtung nach einem der voranstehenden Ansprüche, **dadurch gekennzeichnet, daß** die Drehverbindung (60) im wesentlichen in einem Innenraum (38) der Aufwickeltrommel (14) angeordnet ist.

6. Aufwickeleinrichtung nach einem der voranstehenden Ansprüche, **dadurch gekennzeichnet, daß** die Aufwickeltrommel (14) durch einen in einem Innenraum (36) derselben angeordneten Drehantrieb (40) angetrieben ist.

7. Aufwickeleinrichtung nach einem der voranstehenden Ansprüche, **dadurch gekennzeichnet, daß** die Verbindungsleitung (54) zwischen dem ersten (90) und dem zweiten Strang (92) wicklungsfrei über den Tänzer (100) geführt ist.

8. Aufwickeleinrichtung nach Anspruch 7, **dadurch gekennzeichnet, daß** die Verbindungsleitung (54) über eine Führung (102) des Tänzers (100) geführt ist.

9. Aufwickeleinrichtung nach Anspruch 7 oder 8, **dadurch gekennzeichnet, daß** die Verbindungsleitung in Form einer Umbiegung über den Tänzer (100) geführt ist.

10. Aufwickeleinrichtung nach Anspruch 8 oder 9, **dadurch gekennzeichnet, daß** der Tänzer (100) eine die Verbindungsleitung (54) mittels Rollen (114, 116) führende Durchlaufführung (102) aufweist.

11. Aufwickeleinrichtung nach einem der Ansprüche 9 oder 10, **dadurch gekennzeichnet, daß** die Führung (102) für die Verbindungsleitung (54) an einer parallel zur Drehachse (16) verlaufenden Linearführung (104) geführt ist.

12. Aufwickeleinrichtung nach Anspruch 11, **dadurch gekennzeichnet, daß** die für die Verbindungsleitung (54) vorgesehene Führung (102) des Tänzers (100) so ausgebildet ist, daß der erste (90) und der zweite Strang (92) im wesentlichen parallel zueinander verlaufen.

13. Aufwickeleinrichtung nach einem der voranstehenden Ansprüche, **dadurch gekennzeichnet, daß** der Tänzer (100) in einem festgelegten Verhältnis zur Drehung der ersten Hilfstrommel (62) angetrieben ist.

14. Aufwickeleinrichtung nach Anspruch 13, **dadurch gekennzeichnet, daß** die Drehung der ersten Hilfstrommel (62) und die Umlaufbewegung des Tänzers (100) miteinander synchronisiert sind.

15. Aufwickeleinrichtung nach Anspruch 14, **dadurch gekennzeichnet, daß** die Drehung der ersten Hilfstrommel (62) und die Umlaufbewegung des Tänzers (100) über ein Getriebe (130) gekoppelt sind.

16. Aufwickeleinrichtung nach Anspruch 15, **dadurch gekennzeichnet, daß** das Getriebe (130) gestellfest angeordnet ist.

17. Aufwickeleinrichtung nach Anspruch 16, **dadurch gekennzeichnet, daß** das Getriebe (130) außerhalb der Aufwickeltrommel (14) angeordnet ist.

18. Aufwickeleinrichtung nach einem der voranstehenden Ansprüche, **dadurch gekennzeichnet, daß** der Tänzer (100) auf einer Antriebswelle (30) für die erste Hilfstrommel (62) drehbar gelagert ist.

## Claims

1. A take-up device for a line comprising a frame on which a take-up drum for the line is mounted so as to be rotatable about an axis, and a rotary coupling between a line terminal fixed relative to the frame and a line terminal fixed relative to the take-up drum, the rotary coupling comprising a first auxiliary drum (62) which co-rotates with the take-up drum (14) and a second auxiliary drum (64) which is fixed relative to the frame, said auxiliary drums being arranged coaxially with an axis of rotation (16), the rotary coupling (60) comprising a compensator (100) which is rotatable about the rotation axis (16) at a lower speed than the first auxiliary drum (62), and the rotary coupling (60) comprising a connection line (54) which on one side is fixed relative to the take-up drum and on the other side is fixed relative to the frame, which extends without twisting, and which can be wound onto or unwound from the first auxiliary drum (62), passes from the first auxiliary drum (62) to the compensator (100) in a first strand (90) and passes from the compensator (100) to the second auxiliary drum (64) in a second strand (92) and can be unwound from or wound onto said second auxiliary drum (64), the compensator (100) holding the first strand (90) and second strand (92) so that they extend substantially without sagging, and in its rotational movement the compensator (100) takes up the line length unwound from the one auxiliary drum (62,64) and delivers the line length wound onto the other auxiliary drum (64,62), **characterised in that** the connection line (54) comprises a plurality of individual lines (54₁ to 54₅) which can be commonly wound from one auxiliary drum (62,64) to the other auxiliary drum (64,62) by the compensator (100).

2. A take-up device according to Claim 1, **characterised in that** the individual lines(54₁ to 54₅) are arranged on the auxiliary drums (62,64) extending radially one upon another.

3. A take-up device according to Claim 2, **characterised in that** the auxiliary drums (62,64) comprise guide ribs (72,82) which extend in the form of a coil (76,86) and between which the individual lines (54₁ to 54₅) are located.

4. A take-up device according to one of Claims 2 or 3, **characterised in that** the individual lines (54₁ to 54₅) pass via the compensator (100) extending one beside another.

5. A take-up device according to any one of the preceding claims, **characterised in that** the rotary coupling (6) is substantially arranged in an inner area (38) of the take-up drum (14).

6. A take-up device according to any one of the preceding claims, **characterised in that** the take-up drum (14) is driven by a rotary drive means (40) arranged in an inner area (36) of said take-up drum (14).

7. A take-up device according to any one of the preceding claims, **characterised in that** the connection line (54) between the first strand (90) and the second strand (92) is guided via the compensator (100) in winding-free fashion.

8. A take-up device according Claim 7, **characterised in that** the connection line (54) is guided via a guide means (102) of the compensator (100).

9. A take-up device according to Claim 7 or 8, **characterised in that** the connection line is guided via the compensator (100) in the form of a bend.

10. A take-up device according to Claim 8 or 9, **characterised in that** the compensator (100) comprises a continuous guide means (102) which guides the connection line (54) by means of rollers (114,116).

11. A take-up device according to Claims 9 or 10, **characterised in that** the guide means (102) for the connection line (54) runs on a linear guide (104) extending in parallel to the rotation axis (16).

12. A take-up device according to claim 11, **characterised in that** the guide means (102) of the compensator (100) provided for the connection line (54) is designed such that the first strand (90) and second strand (92) extend substantially in parallel to one another.

13. A take-up device according to any one of the preceding claims, **characterised in that** the compensator (100) is driven in a fixed ratio to the rotation of the first auxiliary drum (62).

14. A take-up device according to claim 13, **characterised in that** the rotation of the first auxiliary drum (62) and the rotational movement of the compensator (100) are synchronised with one another.

15. A take-up device according to claim 14, **characterised in that** the rotation of the first auxiliary drum (62) and the rotational movement of the compensator (100) are coupled via a gear (130).

16. A take-up device according to claim 15, **characterised in that** the gear (13) is fixed relative to the frame.

17. A take-up device according to claim 16, **characterised in that** the gear (13) is arranged outside of the take-up drum (14).

18. A take-up device according to any one of the preceding claims, **characterised in that** the compensator (100) is rotatably mounted on a drive shaft (3) for the first auxiliary drum (62).

## Revendications

1. Dispositif d'enroulement pour un conducteur, comportant un bâti sur lequel est porté, avec liberté de rotation relative autour d'un axe, un tambour d'enroulement pour le conducteur, et, entre un raccord de conducteur fixe par rapport au bâti et un raccord de conducteur fixe par rapport au tambour d'enroulement, une liaison en rotation qui présente un premier tambour auxiliairc (62) entraîné en rotation avec le tambour d'enroulement (14) et un second tambour auxiliaire (64) fixe par rapport au bâti, tambours auxiliaires qui sont disposés coaxialement à un axe de rotation (16) qui présente un mécanisme compensateur (100) qui est entraîné en rotation autour de l'axe de rotation (16) à une vitesse moindre que celle du premier tambour auxiliaire (62) et qui présente un conducteur de liaison (54) qui est relié d'une part fixe par rapport au tambour d'enroulement et d'autre part fixe par rapport au bâti, dont l'allure ne présente pas de torsion, qui peut s'enrouler sur le premier tambour auxiliaire (62) ou s'en dérouler, peut passer du premier tambour auxiliaire (62), par un premier tronçon (90), au mécanisme compensateur (100) et, du mécanisme compensateur (100), par un second tronçon (92), au second tambour auxiliaire (64), et s'en dérouler ou s'y ré-enrouler, étant précisé que le mécanisme compensateur (100) maintient le premier tronçon (90) et le second tronçon (92) dans une allure sensiblement sans flexion et que, lors de son mouvement de révolution, le mécanisme compensateur (100) reçoit la longueur de conducteur déroulée d'un tambour auxiliaire (62, 64) et délivre la longueur de conducteur enroulée sur l'autre tambour auxiliaire (64, 62), **caractérisé par le fait que** le conducteur de liaison (54) présente plusieurs conducteurs individuels (54₁ à 54₅) que le mécanisme compensateur (100) peut faire passer ensemble d'un tambour auxiliaire (62, 64) sur l'autre tambour auxiliaire (64, 62).

2. Dispositif d'enroulement selon la revendication 1, **caractérisé par le fait que** les conducteurs individuels (54₁ à 54₅) sont disposés sur les tambours auxiliaires (62, 64), placés l'un sur l'autre selon la direction radiale.

3. Dispositif d'enroulement selon la revendication 2, **caractérisé par le fait que** les tambours auxiliaires (62, 64) présentent des appendices de guidage perpendiculaires à la surface du tambour (72, 82) qui ont l'allure d'une hélice (76, 86) et entre lesquels se trouvent les conducteurs individuels (54₁ à 54₅).

4. Dispositif d'enroulement selon l'une des revendications 2 ou 3, **caractérisé par le fait que** les conducteurs individuels (54₁ à 54₅) passent par le mécanisme compensateur (100) en étant placés l'un à côté de l'autre.

5. Dispositif d'enroulement selon l'une des revendications précédentes, **caractérisé par le fait que** la liaison en rotation (60) est essentiellement disposée dans un espace intérieur (38) du tambour d'enroulement (14).

6. Dispositif d'enroulement selon l'une des revendications précédentes, **caractérisé par le fait que** le tambour d'enroulement (14) est entraîné par un mécanisme d'entraînement en rotation (40) disposé dans un espace intérieur (36) de ce tambour d'enroulement.

7. Dispositif d'enroulement selon l'une des revendications précédentes, **caractérisé par le fait que** le conducteur de liaison (54) passe par le mécanisme compensateur (100), entre le premier tronçon (90) et le second tronçon (92), sans enroulement.

8. Dispositif d'enroulement selon la revendication 7, **caractérisé par le fait que** le conducteur de liaison (54) est guidé par un guidage (102) du mécanisme compensateur (100).

9. Dispositif d'enroulement selon la revendication 7 ou 8, **caractérisé par le fait que** le conducteur de liaison passe par le mécanisme compensateur (100) en formant une boucle.

10. Dispositif d'enroulement selon la revendication 8 ou 9, **caractérisé par le fait que** le mécanisme compensateur (100) présente un passage (102) qui guide le conducteur de liaison (54) au moyen de galets (114, 116).

11. Dispositif d'enroulement selon l'une des revendications 9 ou 10, **caractérisé par le fait que** le passage (102) pour le conducteur de liaison (54) se fait sur un guidage linéaire (104) orienté parallèlement à l'axe de rotation (16).

12. Dispositif d'enroulement selon la revendication 11, **caractérisé par le fait que** le passage (102), prévu pour le conducteur de liaison (54), dans le mécanisme compensateur (100) est conçu de façon que le premier tronçon (90) et le second tronçon (92) soient orientés sensiblement parallèlement l'un à l'autre.

13. Dispositif d'enroulement selon l'une des revendications précédentes, **caractérisé par le fait que** le mécanisme compensateur (100) est entraîné dans un rapport fixe par rapport à la rotation du premier tambour auxiliaire (62).

14. Dispositif d'enroulement selon la revendication 13, **caractérisé par le fait que** la rotation du premier tambour auxiliaire (62) et le mouvement de révolution du mécanisme compensateur (100) sont synchronisés l'un avec l'autre.

15. Dispositif d'enroulement selon la revendication 14, **caractérisé par le fait que** la rotation du premier tambour auxiliaire (62) et le mouvement de révolution du mécanisme compensateur (100) sont couplés par l'intermédiaire d'un mécanisme d'entraînement (130).

16. Dispositif d'enroulement selon la revendication 15, **caractérisé par le fait que** le mécanisme d'entraînement (130) est disposé fixe par rapport au bâti.

17. Dispositif d'enroulement selon la revendication 16, **caractérisé par le fait que** le mécanisme d'entraînement (130) est disposé à l'extérieur du tambour d'enroulement (14).

18. Dispositif d'enroulement selon l'une des revendications précédentes, **caractérisé par le fait que** le mécanisme compensateur (100) est porté, avec liberté de rotation relative, sur un arbre d'entraînement (30) pour le premier tambour auxiliaire (62).
